# EUROPEAN PATENT APPLICATION

(11) **EP 1 569 146 A1**
(43) Date of publication of application: **31.08.2005**
(21) Application number: 04250989.3
(22) Date of filing: 24.02.2004
(51) Int. Cl.: G06F 17/60

(54) **Method and system for managing unread electronic messages**

(71) Applicant: Research In Motion Limited, Ontario N2L 3W8 (CA)
(72) Inventor: Bocking, Andrew D, Waterloo, Ontario N2K 3Y8 (CA)
(74) Representative: Hibbert, Juliet Jane Grace

(57) **Abstract**

The presence of new unread electronic messages received, that is, messages received since unread messages were last reviewed, is provided by indicia presented to the user. These indicia can take various forms, such as by bolding, flashing, changing the size or color of a count of unread messages, and/or the unread message icon. Alternatively, a separate indication, such as a second count representing the number of new unread electronic messages received, or some other symbol, such as an explanation point, can be displayed.

## Description

### BACKGROUND OF THE INVENTION

### Field of the Invention

Aspects of this invention relate to the presentation of information providing assistance to a recipient in reviewing and processing electronic messages received. More particularly, they relate to a method and apparatus for managing unread electronic messages received.

### Background Information

Electronic messaging has become a ubiquitous means of communication for both business and personal use. The volume of electronic messages received can be overwhelming. Devices that process electronic messages typically maintain a message list identifying electronic messages received for reading and processing by the recipient. Such processing can include replying to, deleting and filing the messages. It is common to provide a count of unread messages.

Recipients of electronic messages can be classified as either: (a) cleaners - those who file/delete electronic messages to maintain a clean message list that can then essentially be used as a task list; and (b) collectors - those who rarely file or delete electronic messages and leave numerous messages unread on an ongoing basis. Anecdotally, there is roughly a 50/50 split between cleaners and collectors within the user base of handheld electronic devices.

### SUMMARY OF THE INVENTION

In accordance with an aspect of the invention, an indication is provided of the presence of new unread electronic messages received since the message list was last viewed (and potentially an e-mail message opened/viewed). This indication can merely signal that there are new unread messages or it can be quantitative and indicate the number of new unread messages received.

More particularly, one aspect of the invention is directed to a method of managing unread electronic messages received that comprises the steps of: providing an indication of the presence of unread electronic messages received; enabling scanning of the unread electronic messages received without reading; and generating an indication that new electronic messages have been received since the unread electronic messages received were last scanned. The presence of unread electronic messages can be provided through a visual display with the indication of new electronic messages received generated by altering the visual display. The visual display can be altered in various ways to indicate the presence of new unread electronic messages received. For instance, where the visual display provides a visual indication of the count of unread electronic messages received, the display can be altered by, for example, bolding, flashing, changing the size or changing the color of the count. Where an icon representing the presence of unread electronic messages is used in addition to the count of unread messages, the display can be altered by altering at least one of the icon and the count. Furthermore, the display can be altered to indicate the presence of new unread electronic messages received by adding an indicia, which can be a second count representing the number of new unread electronic messages received.

Another aspect of the invention is directed to a system for managing electronic messages received comprising: a display, a message list of electronic messages received with identification of those that are unread; an input means for selectively displaying the message list on the display for scanning for unread messages received; and indicator means on the display indicating the presence of new unread electronic messages received since the message list was last displayed. The indicating means can include means providing on the display a count of the unread electronic messages received in addition to the indication of the presence of new unread electronic messages received. The indicating means providing an indication of new unread electronic messages received can be an alteration to the count of the unread electronic messages received such as by at least one of bolding the count, flashing the count, changing the size of the count and changing the color of the count. Alternatively, the indicator means providing the indication of the presence of a new unread electronic message received can provide additional indicia on the display such as a second count that is a count of the new unread electronic messages received, or another symbol. Also, alternatively the indicator means can further comprise a message icon on the display adjacent the count of unread electronic messages received and the indication of the presence of new unread electronic messages received can be an alteration to the message icon, such as for example, by bolding, flashing, changing the size and/or changing the color of the icon.

### BRIEF DESCRIPTION OF THE DRAWINGS

A full understanding of the invention can be gained from the following description of the preferred embodiments when read in conjunction with the accompanying drawings in which:
Figure 1 is a front view of a handheld electronic device incorporating the invention and displaying the home screen indicating the presence of unread electronic messages received, but no new unread electronic messages received.
Figure 2 is a message list displayed on the handheld electronic device of Figure 1.
Figure 3 is a message list similar to Figure 2 illustrating the display of an indication of the presence of new unread electronic messages received in accordance with one embodiment of the invention.
Figure 4 is a flow chart illustrating implementation of the embodiment of Figure 3.
Figure 5 is similar to Figure 3 but illustrating a display of an indication of the presence of new unread electronic messages received in accordance with a second embodiment of the invention.
Figure 6 is similar to Figure 3 but illustrating a display of an indication of the presence of new unread electronic messages received in accordance with a third embodiment of the invention.
Figure 7 is similar to Figure 3 but illustrating a display of an indication of the presence of new unread electronic messages received in accordance with a fourth embodiment of the invention.
Figure 8 is similar to Figure 3 but illustrating a display of an indication of the presence of new unread electronic messages received in accordance with a fifth embodiment of the invention.
Figure 9 is similar to Figure 3 but illustrating a display of an indication of the presence of new unread electronic messages received in accordance with a sixth embodiment of the invention.

### DESCRIPTION OF THE PREFERRED EMBODIMENTS

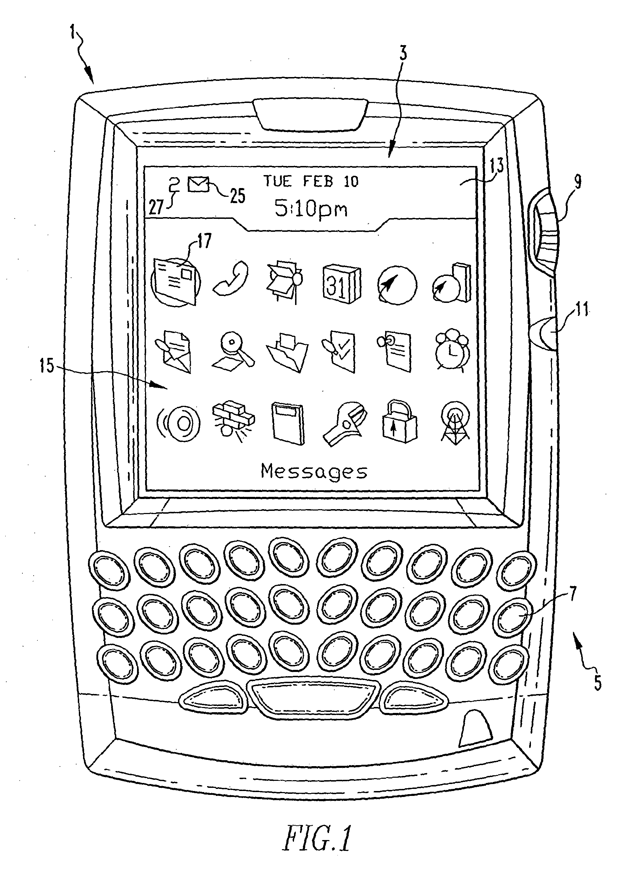

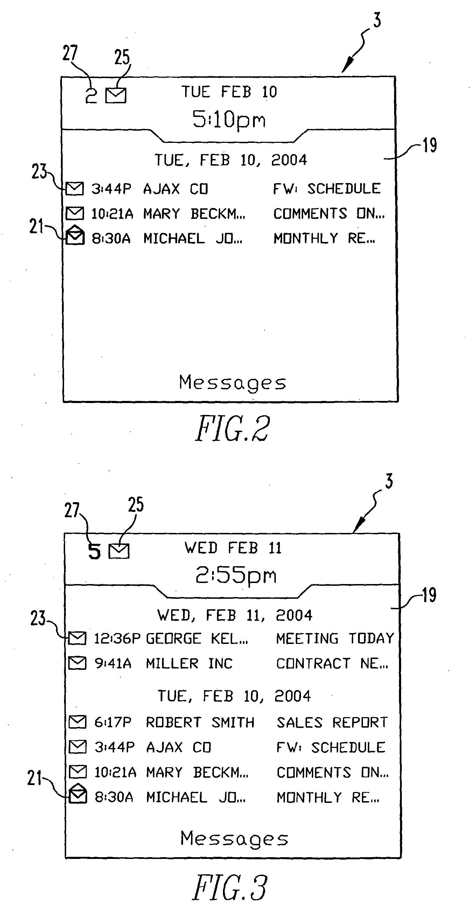

Aspects of the invention will be described as applied to a handheld electronic device. However, they are applicable to other devices that receive electronic messages such as workstations, desktop computers, laptop computers, cell phones and the like. In the exemplary embodiments of the invention, the electronic messages are text messages that are delivered over the Internet, an intranet or other communications channels, and can include wireless transmissions. Referring to Figure 1, the handheld electronic device 1 has a display 3 and an input device 5 that includes a keyboard 7, a trackwheel 9 and an escape button 11. The display 3 can present a number of screens with Figure 1 illustrating the home screen 13. The home screen 13 displays a number of icons 15 which can be highlighted by the trackwheel 9 to select one of a number of functions that can be performed by the device, as is known. An icon 17 can be selected to bring up on the display a message list 19 illustrated in Figure 2, which presents summary information on all of the electronic messages received that have not yet been processed. This includes messages that have been read and those that are unread. Messages are read by scrolling through the message list with the trackwheel 9 and then pressing inward on the trackwheel to open the selected message. Messages that have been read are identified by the open envelope icon 21 at the left side of the message list 19. Those that are unread are identified by the closed envelope icon 23.

When there are unread electronic messages, a mail icon 25 is displayed in the top left corner of the message list screen 19 with an indicia of the number of unread electronic messages received in the form of a count 27 of unread messages presented to the left of the mail icon 25, as is common practice. In the example of Figure 2, there are two unread electronic messages. Returning to Figure 1, the mail icon 25 and unread message count 27 are also displayed in the upper left corner of the home screen 13 when there are unread electronic messages present.

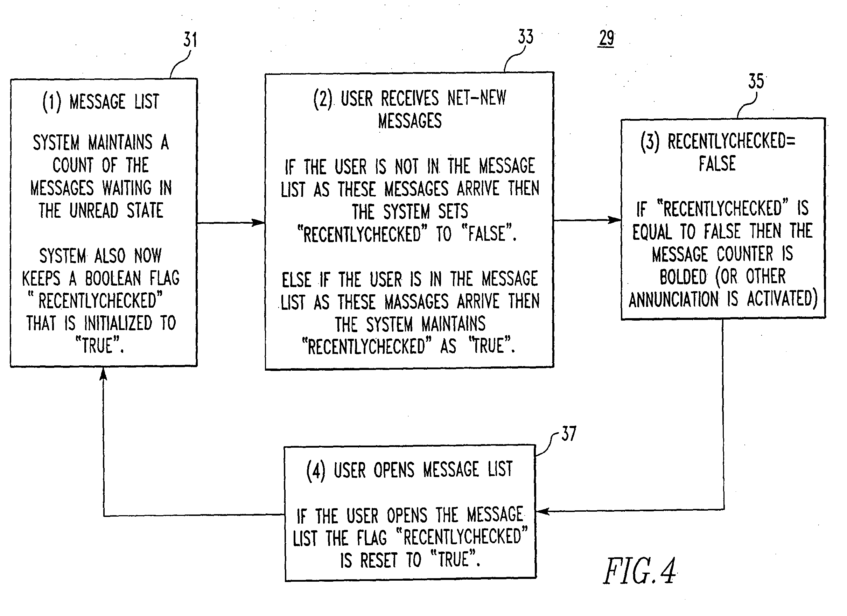

As was mentioned, there are a significant number of recipients of electronic messages who do not regularly clean out their messages received because of the sheer volume of messages and/or the lack of time or inclination. Aspects of the invention help these people to manage their electronic messages received by providing an indication that new electronic messages have been received since the user last scanned the message list. Figure 3 extends the example of Figure 2 by illustrating the message list 19 at a later time when three new unread messages have been received since the list was last scanned to join the two old messages that remain unread. In accordance with this aspect of the invention, an indication of the presence of unread electronic messages received is provided. This is implemented, for example, by the mail icon 25 accompanied by the unread message count 27 presented on the home screen 13, as is common. Scanning of the unread electronic messages received without reading of the messages is enabled by calling up the message list 19 through selection of the read mail icon 17 from the home screen 13 shown in Figure 1. An indication that new unread electronic messages have been received since the message list was last scanned is also provided. This indication can take many forms. In a first embodiment of the invention illustrated in Figure 3, the unread message count 27 is bolded to provide this indication. The same bolding of the unread message count 27 is effected on the home screen 13 (not shown). The user may then call up from the home screen and scan the message list 19. As the messages are arranged in the order received, the user need only scan from the top of the message list to observe the new unread electronic messages received.

Figure 4 is a flow chart 29 illustrating the process. As indicated at 31, the system maintains a count of messages waiting in the unread state. The system also keeps a "recently checked" flag that is initialized to "true." When the user receives net-new messages at 33 and the device is not displaying the message list as these messages arrive, the "recently checked" flag is set to "false." If the user is viewing the message list as these new messages arrive, the system maintains the "recently checked" flag in the "true" state. When the "recently checked" flag is set to "false," the unread message count icon 27 is bolded at 35. Alternatively, as discussed below, other annunciations can be activated to provide the indication of the presence of new unread electronic messages received. When the user opens the message list 19 as indicated at 37, the "recently checked" flag is reset to "true" until additional new unread electronic messages are received. Alternatively, or in addition to bolding the unread message count 27, the mail icon 25 can be bolded.

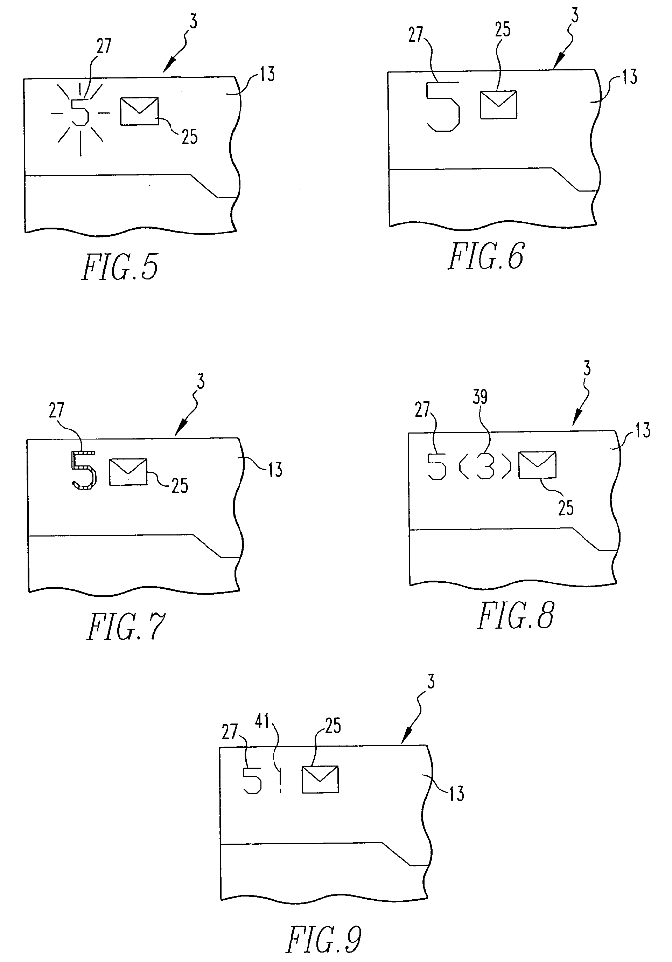

Figure 5 illustrates a second embodiment of the invention in which the unread message count 27 is flashed to provide the indication of new unread electronic messages received. As in the case of bolding, alternatively or additionally, the mail icon 25 can be flashed.

A third embodiment of the invention is illustrated in Figure 6 where the size of the unread message count (and/or the size of the mail icon 25) can be increased to provide the indication of new unread messages received.

Figure 7 illustrates a fourth embodiment of the invention in which the color of the unread message count 27 (and/or the mail icon 25) is changed to provide the indication of new unread electronic messages received. Where the device has a black and white display, the color change can be implemented by a negative image of the count (e.g., white on black instead of black on white).

A fifth embodiment of the invention is illustrated in Figure 8 where a second count 39, which is a count of the new unread messages received, is displayed on the home screen 13 in addition to the unread message count 27. This second count 39 can be distinguished, such as by placing it in parenthesis as shown in Figure 8, making it a different color from the count 27, or by otherwise differentiating the two counts.

In yet another, sixth, embodiment of the invention, an additional indicia 41 is provided to indicate the presence of new unread electronic messages. In the example an explanation point is used. Clearly, other symbols could be used. In fact, it will be apparent at this point that other indicia, within the imagination of those skilled in the art, could be provided to indicate the presence of new unread electronic messages.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A method of managing unread electronic messages comprising the steps of:
providing an indication of the presence of unread electronic messages received;
enabling scanning of the unread electronic messages received without reading; and
generating an indication that new electronic messages have been received since the unread electronic messages received were last scanned.

2. The method of Claim 1, wherein the step of providing an indication of the presence of unread electronic messages received comprises providing a visual display indicating the presence of unread electronic messages received.

3. The method of Claim 2, wherein the step of generating an indication that new electronic messages have been received comprises altering the visual display.

4. The method of Claim 3, wherein providing the visual display indicating the presence of unread electronic messages received comprises providing an icon indicating the presence of unread electronic messages received and altering the visual display comprises altering the icon to indicate the presence of new electronic messages received.

5. The method of Claim 4, wherein altering the icon comprises at least one selected from the group comprising: flashing, bolding, changing the size, and changing the color of the icon.

6. The method of Claim 3, wherein altering the visual display comprises adding indicia of new unread electronic messages received.

7. The method of Claim 3, wherein providing the visual display indicating the presence of unread electronic messages received comprises providing a visual indication of a count of unread electronic messages received.

8. The method of Claim 7, wherein altering the visual display comprises at least one selected from a group comprising: bolding, flashing, changing the size, and changing the color of the count of unread electronic messages received.

9. The method of Claim 7 or 8, wherein the step of providing a visual display further comprises providing an unread mail icon indicating the presence of unread electronic messages along with the visual indication of the count of unread electronic messages, and altering the display to indicate the presence of new unread electronic messages received comprises altering at least one of the unread mail icon and the count.

10. The method of Claim 9, wherein altering the display comprises adding to the visual display a second count of the new unread electronic messages received since the last scan.

11. A system for managing electronic messages received, comprising:
a display;
a message list of electronic messages received with identification of those that are unread;
input means for selectively displaying the message list on the display for scanning for unread messages received; and
indicator means on the display indicating the presence of new unread electronic messages received since the message list was last displayed.

12. The system of Claim 11, wherein the indicator means comprises a count of unread electronic messages displayed on the display in addition to the indication of the presence of new unread electronic messages received.

13. The system of Claim 12, wherein the indicator means indicating the presence of new unread electronic messages received comprises an alteration to the count of unread electronic messages received.

14. The system of Claim 13, wherein the indicator means providing an alteration to the count comprises indicator means comprises at least one of: bolding the count, flashing the count, changing the size of the count and changing the color of the count.

15. The system of Claim 12, wherein the indicator means indicating the presence of new unread electronic messages received comprises additional indicia on the display.

16. The system of Claim 12, wherein the indicator means further comprises a message icon on the display adjacent the count of unread electronic messages received and the indication of the presence of new unread electronic messages received since the message list was last displayed comprises means altering the message icon.

17. The system of Claim 16, wherein the means providing alteration to the message icon comprises at least one of: bolding the icon, flashing the icon, changing the size of the icon and changing the color of the icon.

18. The system of Claim 12, wherein the indicating means indicating the presence of new unread electronic messages received comprises a second count, which is a count of the new unread electronic messages received.
